**Europäisches Patentamt**

**European Patent Office**

**Office européen des brevets**

(19)

(11) Numéro de publication: **0 213 980**
**B1**

(12)

# FASCICULE DE BREVET EUROPEEN

(45) Date de publication du fascicule du brevet:
**17.01.90**

(21) Numéro de dépôt: **86401480.8**

(22) Date de dépôt: **03.07.86**

(51) Int. Cl.⁴: **F23G 5/50**, F23G 5/08,
F23K 3/02, F23K 3/18,
F22B 31/04, F23G 5/46

(54) **Procédé de régulation de la puissance thermique d'un incinérateur d'ordures ménagères et installation pour la mise en oeuvre de ce procédé.**

(30) Priorité: **05.07.85 FR 8510318**

(43) Date de publication de la demande:
**11.03.87 Bulletin 87/11**

(45) Mention de la délivrance du brevet:
**17.01.90 Bulletin 90/3**

(84) Etats contractants désignés:
**BE CH DE GB IT LI LU NL**

(56) Documents cités:
**EP-A- 0 068 115**
**DE-B- 1 188 753**
**DE-B- 1 289 938**
**DE-C- 923 213**
**FR-A- 790 010**
**FR-A- 2 221 367**
**FR-A- 2 235 335**
**FR-A- 2 278 040**
**FR-A- 2 353 796**
**FR-A- 2 501 833**
**US-A- 2 226 923**
**US-A- 3 223 058**
**US-A- 3 482 534**
**US-A- 3 625 186**
**US-A- 3 769 921**

(73) Titulaire: **CHARBONNAGES DE FRANCE, Etablissement public dit:, Tour Albert 1er 65 avenue de Colmar, F-92507 Rueil Malmaison Cédex(FR)**

(72) Inventeur: **Bardou, Michel Marcel, 6, Chemin des Ecureuils, F-69160 Tassin La Demi-Lune(FR)**
Inventeur: **Lefebvre, Gérard, 35, Avenue Lavoisier Dainville, F-62000 Arras(FR)**

(74) Mandataire: **Chevallier, Robert Marie Georges et al, Cabinet BOETTCHER 23, rue La Boétie, F-75008 Paris(FR)**

(56) Documents cités: (suite)
**FÖRDERN UND HEBEN,**
**vol. 32, no. 2, février 1982, pages 99-101; M. MADHUSUDANA RAO et al.: "Druckluftförderung von körnigem Material in vertikalen Abzweigleitungen"**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

L'invention a pour objet un procédé destiné à régulariser le flux de chaleur obtenu par combustion des ordures ménagères brûlées dans des incinérateurs. Elle concerne aussi une installation pour la mise en oeuvre de ce procédé.

Dans les incinérateurs d'ordures ménagères de capacité élevée, par exemple de capacité supérieure à 3 tonnes/heure, une chaudière est placée sur le trajet des fumées de combustion, afin de permettre une récupération partielle de la chaleur des fumées à l'aide d'un fluide caloporteur, le plus souvent sous forme de vapeur d'eau. Toutefois, cette récupération de chaleur est très fluctuante, d'une part parce que le débit d'alimentation de l'incinérateur en ordures ménagères est lui-même très variable, du fait de l'irrégularité des ramassages d'ordures et ceci malgré des tentatives de régularisation à partir d'un stock, d'autre part parce que le pouvoir calorifique inférieur des ordures varie souvent dans d'assez larges limites. En outre, les enfournements d'ordures sont parfois effectués de façon discontinue.

Il en résulte que la production de vapeur est tout à fait irrégulière et qu'elle ne. satisfait pas aux besoins qui sont de nature beaucoup plus constante. Pour cette raison, ce mode de récupération d'énergie ne connait pas le développement qu'il pourrait avoir.

Le but principal de l'invention est d'obtenir, à partir d'incinérateurs d'ordures ménagères, une production régulière et contrôlée de chaleur, c'est-à-dire une puissance thermique de valeur déterminée sensiblement constante.

A cet effet, pour réguler le flux de chaleur produit par un incinérateur d'ordures ménagères, quelles que soient les variations du débit d'alimentation de cet incinérateur en ordures ménagères et les variations du pouvoir calorifique de ces dernières, selon l'invention on introduit dans le foyer de l'incinérateur un appoint contrôlé d'un combustible solide auxiliaire constitué par des particules de charbon de grosseur comprise entre 0 et 6 millimètres que l'on introduit dans le foyer à partir d'une trémie de stockage à l'aide d'un courant d'air de transport, on sépare l'air et le charbon à proximité du foyer, on introduit à un débit dosé en fonction du débit du fluide caloporteur lesdites particules de charbon à l'intérieur du foyer au-dessus de la couche incandescente d'ordures ménagères supportées par la grille, de telle manière que la combustion de ces particules se produit substantiellement avant qu'elles atteignent ladite couche, l'air de combustion nécessaire à ces particules étant essentiellement prélevé sur l'excès d'air de combustion des ordures ménagères.

De préférence, les particules de charbon sont telles que leur combustion a lieu pendant leur suspension dans l'atmosphère du foyer, avant qu'elles atteignent ladite couche incandescente; l'air de combustion de ces particules est prélevé essentiellement sur l'excès d'air de combustion des ordures ménagères.

Il est avantageux de prévoir selon l'invention l'emploi d'un moyen de projection des particules de charbon, par exemple une buse, monté réglable en orientation, ce qui permet d'ajuster de façon optimale la trajectoire de ces particules, dans l'atmosphère du foyer, en fonction des conditions de combustion des ordures ménagères.

L'invention n'est pas limitée à l'emploi du charbon comme combustible auxiliaire. On peut aussi utiliser tout autre combustible sous forme divisée.

Dans une installation qui est ajoutée à un incinérateur d'ordures ménagères pour la mise en oeuvre du procédé défini ci-dessus à l'aide de charbon de fine granulométrie, il est prévu une trémie de stockage du charbon, un dispositif d'extraction disposé à la partie inférieure de cette trémie pour en faire sortir progressivement le charbon, une conduite pneumatique de transport partant de la sortie du dispositif d'extraction, un séparateur air-charbon de préférence du type cyclone installé à proximité de l'incinérateur et auquel est raccordée la conduite pneumatique de transport; ce séparateur a une première sortie qui est une sortie de dégazage de l'air de transport et qui peut être avantageusement raccordée au foyer de l'incinérateur, et une seconde sortie qui est une sortie du charbon raccordée à un dispositif doseur qui est lui-même raccordé par une .tubulure au foyer de l'incinérateur à un niveau supérieur au lit de matières en combustion et qui est .aussi asservi à un paramètre tel que le débit de vapeur, une arrivée d'air de transport est raccordée à la sortie du dispositif doseur.

On donnera maintenant une description plus détaillée d'une installation conforme à l'invention pour l'application du procédé. On se reportera aux dessins annexés dans lesquels:

- la figure 1 est une vue générale schématique d'une installation associée à un incinérateur d'ordures ménagères, utilisant le charbon comme combustible auxiliaire,
- la figure 2 est un graphique montrant en fonction des jours de la semaine (en abcisse) la puissance (en ordonnée) par rapport à sa puissance nominale 1, d'un incinérateur d'ordures ménagères, avec et sans le dispositif de l'invention.

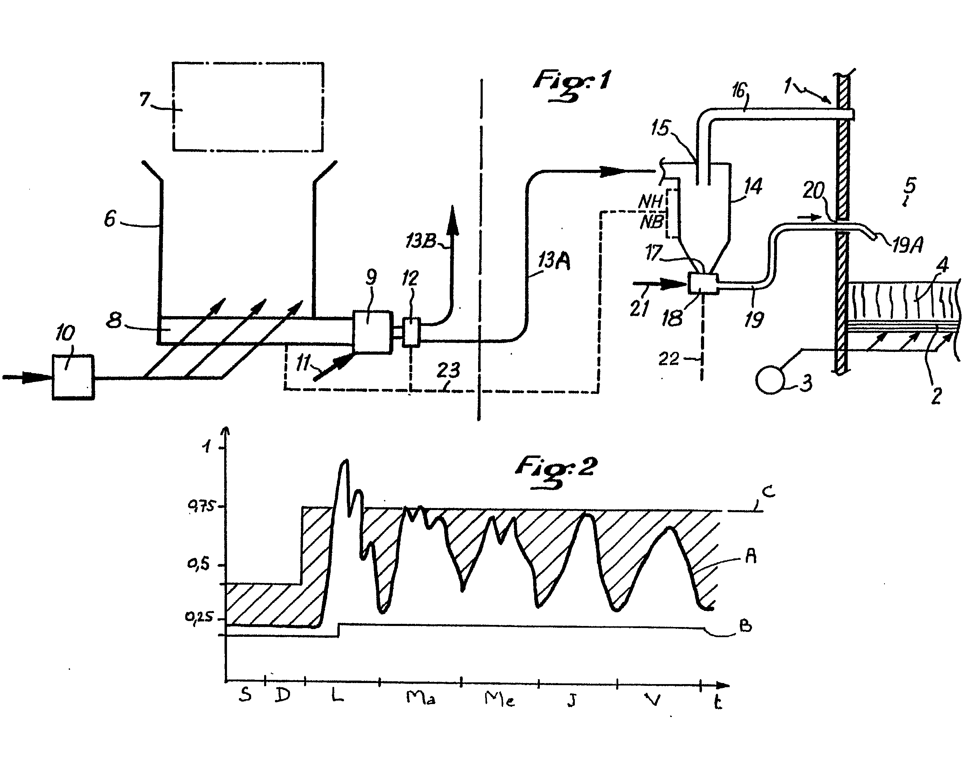

Sur la figure 1, un incinérateur d'ordures ménagères 1, représenté partiellement, a une grille de combustion 2 sous laquelle est insufflé de l'air primaire, en 3, et sur laquelle brûle une couche 4 d'ordures ménagères à l'intérieur du foyer désigné par la référence générale 5.

L'installation de l'invention comprend une trémie 6 de stockage de charbon en particules dont les grains ont une grosseur comprise entre 0 et 6 mm. Cette trémie 6 peut être alimentée directement par du charbon en grains ; elle peut aussi être associée à un crible 7, schématisé par un rectangle en trait mixte au-dessus de cette trémie. Le crible 7 trie le charbon qu'il reçoit et il élimine les particules trop grosses.

A la partie inférieure de la trémie 6 est monté un dispositif 8 d'extraction du charbon qui se termine par un sas d'expédition 9. Dans cet exemple, la trémie 6 est une trémie séchante qui est parcourue d'air chaud à travers le dispositif d'extraction 8, à partir d'une batterie de chauffe 10, comme indiqué par des flèches.

Le sas d'expédition 9 est alimenté en air de transport arrivant en 11.

La trémie 6 peut être commune à plusieurs incinérateurs 1. Dans ce cas le dispositif d'extraction 8 est suivi d'une écluse 12 à partir de laquelle partent des canalisations 13A, 13B, .... Chaque canalisation 13A, 13B aboutit à un cyclone séparateur 14 qui a une première sortie 15 pour dégazage de l'air de transport par une tubulure 16 raccordée au foyer 5. Le cyclone 14 a une seconde sortie 17, ou sortie de charbon, raccordée à un dispositif doseur 18 qu'une tubulure 19 raccorde au foyer de l'incinérateur 1, en 20, à un niveau supérieur au niveau de la face supérieure de la couche 4 de matières en combustion. Le dispositif doseur 18 est raccordé aussi, en 21, à une arrivée d'air de transport.

La tubulure 19 pénètre à l'intérieur du foyer 5 et se termine par une partie extrême 19A incurvée et inclinée dont le rayon de courbure et l'inclinaison réglables et ajustés en fonction du type d'incinérateur et de la nature du charbon, le résultat à obtenir est que, conformément au procédé, le charbon en particules envoyé dans le foyer 5 brûle avant d'atteindre la couche 4 de matières en combustion.

Le débit du charbon est régulé par une chaîne de régulation connue en soi, représentée en trait interrompu 22, qui agit sur le dispositif doseur 18 en fonction du débit de vapeur, ou d'eau chaude, que fournit la chaudière de récupération de l'incinérateur 1.

Une autre chaîne de régulation 23 agit sur le dispositif d'extraction 8, et sur l'écluse 12 éventuellement, en fonction du niveau haut (NH) et du niveau bas (NB) du charbon dans le séparateur 14.

Il peut arriver que l'installation reçoive du charbon trop gros. Pour obtenir la granulométrie inférieure à 6 mm, il est avantageux de le traiter sur place dans un broyeur-sécheur de type connu qui est placé au niveau du sas d'expédition 9.

La figure 2 est un graphique de la puissance thermique d'un incinérateur d'ordures ménagères pendant les 7 jours d'une semaine de fonctionnement, considérés du samedi au vendredi suivant.

Sur cette figure, la courbe A représente les variations de la puissance thermique de l'incinérateur par simple combustion des ordures ménagères enfournées. On observe que cette puissance est basse et régulière le samedi (S) et le dimanche (D), jours sans ramassage d'ordures, pendant lesquels on consomme le stock, et qu'elle est plus élevée, mais très fluctuante, les jours ouvrables, suivant les arrivages d'ordures.

Le tracé B indique le niveau de puissance thermique que l'on peut garantir à partir de la simple incinération des ordures enfournées.

Le tracé C indique le niveau de puissance thermique du même incinérateur qui peut être garanti avec l'emploi d'un combustible auxiliaire selon l'invention.

Exceptionnellement, le lundi matin, un afflux massif d'ordures ménagères entraîne, pour quelques heures seulement, une puissance thermique supérieure à la puissance C recherchée et garantie.

A chaque instant, la zone hachurée entre la courbe A et le tracé C représente la puissance thermique apportée par le combustible auxiliaire.

Bien entendu, selon les besoins de la consommation d'eau chaude ou de vapeur, il est possible en appliquant l'invention, de suivre une courbe de puissance thermique qui ne soit pas une ligne horizontale. Cette courbe peut prendre toutes les allures possibles, à la seule condition qu'elle soient compatibles avec les conditions d'une bonne régulation du débit de combustible auxiliaire, en particulier avec les temps de réponse des appareils de régulation.

Pour les incinérations d'ordures ménagères avec récupération de la chaleur des fumées, les avantages du procédé de régulation thermique selon l'invention sont les suivants:

1. Une bonne régulation de la production thermique récupérée, adaptée à volonté à la demande instantanée.

2. Une garantie d'un niveau déterminé de production de thermies récupérées, donc avec un prix de vente unitaire plus élevé.

3. Une augmentation du rendement global de la récupération de chaleur par:

a) réduction au minimum possible compatible avec la tenue des matériaux, de l'excès d'air qui, dans des incinérateurs de type connu, dépasse souvent 50 %

b) augmentation du rendement de récupération des échangeurs par suite d'une meilleure régularisation du flux thermique les traversant.

4. Un investissement, pour la projection du combustible auxiliaire, ainsi que pour sa régulation et pour celle de l'air de combustion, qui reste relativement marginal, de l'ordre de 10 % du prix d'un incinérateur de type connu.

5. Un excellent rendement de la combustion du combustible auxiliaire, celui-ci étant projeté dans une zone très chaude, au-dessus de la couche incandescente d'ordures, qui se tient généralement au-dessus de 950°C. Une bonne orientation de la projection de ce combustible d'appoint améliore encore ce rendement thermique.

Il est possible d'apporter à l'installation décrite plus haut en détail un perfectionnement consistant à munir la partie extrême 19A de la tubulure 19 d'un moyen de répartition qui favorise une meilleure distribution du combustible d'appoint projeté. Ce moyen peut être constitué, par exemple, par des ailettes intérieures inclinées appelées ventelles, ou, aussi, par une coupelle rotative.

**Revendications**

1. Procédé pour réguler le flux de chaleur produit par un incinérateur d'ordures ménagères chauffant un fluide caloporteur, ayant un foyer muni d'une grille pour supporter une couche d'ordures ménagères en combustion et auquel on fournit un appoint thermique contrôlé et modulable, caractérisé en ce qu'on emploie pour cet appoint thermique un combustible solide auxiliaire constitué par des particules de charbon de grosseur comprise entre 0 et 6 millimètres que l'on introduit dans le foyer à partir d'une trémie de stockage à l'aide d'un courant d'air de transport, on sépare l'air et le charbon à proximité du foyer, on introduit à un débit dosé en fonction du débit du fluide caloporteur lesdites particules de charbon à l'intérieur du foyer au-dessus de la couche incandescente d'ordures ménagères supportées par la grille, de telle manière que la combustion de ces particules se produit substantiellement avant qu'elles atteignent ladite couche, l'air de combustion nécessaire à ces particules étant essentiellement prélevé sur l'excès d'air de combustion des ordures ménagères.

2. Procédé selon la revendication 1 caractérisé en ce que les particules de charbon ont, pour 80 % environ d'entre elles, une grosseur inférieure ou égale à 80 microns.

3. Installation pour la mise en oeuvre du procédé selon l'une quelconque des revendications 1 ou 2 avec un incinératuer (1) ayant dans un foyer (5) une grille (2) supportant une couche (4) d'ordures ménagères en combustion, et fournissant un fluide caloporteur, caractérisée en ce qu'elle comprend une trémie de stockage (6) de charbon en particules, un dispositif (8) d'extraction du charbon monté à la base de la trémie (6), un sas d'expédition (9) monté à la sortie du dispositif (8) d'extraction et raccordé à une arrivée (11) d'air de transport, une canalisation de transport (13A) aboutissant à un séparateur (14) air-charbon ayant une première sortie d'air (15) et une seconde sortie de charbon (17) qui est raccordée à un dispositif doseur (18), une tubulure (19) raccordant la sortie du dispositif doseur (18) au foyer (5) à un niveau (20) supérieur à celui des matières en combustion sur la grille (2), ce dispositif doseur (18) étant commandé par une chaîne de régulation (22) en fonction du débit de vapeur ou d'eau chaude de l'incinérateur.

4. Installation selon la revendication 3 caractérisée en ce que la première sortie d'air (15) du séparateur (14) air-charbon est raccordée par une tubulure (16) au foyer (5) comme arrivée d'air secondaire.

5. Installation selon la revendication 3 caractérisée en ce que la trémie (6) est associée à un broyeur-sécheur.

6. Installation selon la revendication 3 pour plusieurs incinérateurs (1) caractérisée en ce que, à la sortie du sas d'expédition (9) est montée une écluse (12) à partir de laquelle s'étendent des canalisations (13A, 13B) en direction respectivement d'un séparateur air-charbon (14) associé à chaque incinérateur.

7. Installation selon la revendication 3 caractérisée en ce que la tubulure (19) pénètre à l'intérieur du foyer (5) et se termine par une partie extrême (19A) incurvée et inclinée réglable en incurvation et en inclinaison.

8. Installation selon la revendication 3 caractérisée en ce que la tubulure (19) pénètre à l'intérieur du foyer (5) et elle est munie dans sa partie extrême (19A) d'un moyen de répartition apte à améliorer la distribution du combustible d'appoint.

## Claims

1. A process for regulating the heat flux produced by a domestic refuse incinerator for heating a heat exchange fluid, having a combustion chamber provided with a grid for supporting a layer of domestic refuse undergoing combustion and to which a monitored and modulatable make-up amount of heat is supplied, characterised by using for said make-up amount of heat an auxiliary solid fuel which is formed by particles of coal which are of a size of between 0 and 6 millimetres and which are introduced into the combustion chamber from a storage hopper by means of a conveying air flow, separating the air and the coal in the vicinity of the combustion chamber, and introducing the particles of coal within the combustion chamber above the incandescent layer of domestic refuse supported by the grid, at a flow rate which is metered in dependence on the flow rate of the heat exchange fluid, in such a way that combustion of said particles occurs substantially before they reach said layer, the combustion air required for said particles being essentially taken from the excess of combustion air for the domestic refuse.

2. A process according to claim 1 characterised in that in respect of 80% approximately of the particules of coal, they are of a size which is less than or equal to 80 microns.

3. An installation for carrying out the process according to either one of claims 1 and 2 comprising an incinerator (1) having in a combustion chamber (5) a grid (2) for supporting a layer (4) of domestic refuse undergoing combustion, and supplying a heat exchange fluid, characterised in that it comprises a storage hopper (6) for coal in the form of particles, a device (8) for extraction of the coal which is mounted at the base of the hopper (6), a discharge lock (9) mounted at the outlet of the extraction device (8) and connected to a conveying air intake (11), a conveying conduit (13A) terminating at an air-coal separator (14) having a first air outlet (15) and a second coal outlet (17) which is connected to a metering device (18), a pipe (19) connecting the outlet of the metering device (18) to the combustion chamber (5) at a level (20) which is higher than that of the materials undergoing combustion on the grid (2), said metering device (18) being controlled by a regulating chain (22) in dependence on the flow rate of steam or hot water from the incinerator.

4. An installation according to claim 3 characterised in that the first air outlet (15) of the air-coal separator (14) is connected by a pipe (16) to the combustion chamber (5) as a secondary air intake.

5. An installation according to claim 3 characterised in that the hopper (6) is associated with a crusher-drier unit.

6. An installation according to claim 3 for a plurality of incinerators (1) characterised in that mounted at the outlet of the discharge lock chamber (9) is a lock gate device (12) from which respective conduits (13A, 13B) extend towards an air-coal separator (14) associated with each incinerator.

7. An installation according to claim 3 characterised in that the pipe (19) passes into the interior of the combustion chamber (5) and terminates in an end portion (19A) which is curved and inclined and adjustable in respect of curvature and inclination.

8. An installation according to claim 3 characterised in that the pipe (19) passes into the interior of the combustion chamber (5) and it is provided in its end portion (19A) with a distribution means for improving distribution of the make-up fuel.

## Patentansprüche

1. Verfahren zum Regeln der von einem ein Wärmetransportfluid aufheizenden Verbrennungsofen für Hausmüll erzeugten Wärme, wobei der Verbrennungsofen einen Feuerraum mit einem Gitterrost zur Aufnahme einer der Verbrennung unterliegenden Schicht von Hausmüll aufweist und wobei man dem Verbrennungsofen einen gesteuerten und veränderbaren thermischen Zusatz zuführt, dadurch gekennzeichnet,

– daß man als thermischen Zusatz einen Hilfs-Festbrennstoff verwendet, welcher aus Kohlepartikeln in der Größe zwischen 0 und 6 mm gebildet ist und die man aus einem Bunkerschacht mit Hilfe eines Transportluftstromes in den Feuerraum einbringt,

– daß man in der Nähe des Feuerraumes die Luft von der Kohle trennt,

– daß man die Kohlepartikel mit einer von der Speiserate des Wärmetransportfluids abhängigen Speiserate ins Innere des Feuerraumes auf die auf dem Gitterrost liegende, glühende Hausmüllschicht gibt, derart, daß die Verbrennung dieser Partikel im wesentlichen erfolgt, bevor sie diese Schicht erreichen, wobei die für diese Partikel erforderliche Verbrennungsluft im wesentlichen dem Überschuß der Verbrennungsluft für den Hausmüll entnommen wird.

2. Verfahren nach Anspruch 1, dadurch gekennzeichnet, daß die Kohlepartikel zu etwa 80% eine Größe haben, die kleiner als oder gleich 80 μm ist.

3. Einrichtung zur Durchführung des Verfahrens nach Anspruch 1 oder 2, mit einem Verbrennungsofen (1), welcher einen in einem Feuerraum (5) angeordneten Gitterrost (2) zur Aufnahme einer Schicht (4) von der Verbrennung unterliegendem Hausmüll hat, und welcher ein Wärmetransportfluid liefert, dadurch gekennzeichnet, daß sie einen Bunkerschacht (6) für partikelförmige Kohle umfaßt, ferner eine am Boden des Bunkerschachtes (6) montierte Einrichtung (8) zum Abführen der Kohle, ein am Ausgang der Abführeinrichtung (8) montiertes und an einen Einlaß (11) für Transportluft angeschlossenes Transportsieb (9), ein zu einem Luft/Kohle-Separator (14) mit einem ersten Ausgang (15) für Luft und einem zweiten, an eine Dosiereinrichtung (18) angeschlossenen Ausgang (17) für Kohle führendes Transport-Kanalsystem (13A), ferner eine Rohrleitung (19), welche den Ausgang der Dosiereinrichtung (18) mit dem Feuerraum (5) auf einem Niveau (20) verbindet, welches höher als das der auf dem Gitterrost (2) liegenden, der Verbrennung unterliegenden Materialien ist, wobei die Dosiereinrichtung (18) von einer Regeleinrichtung (22) in Abhängigkeit von der Speiserate des Dampfes oder des Heißwassers des Verbrennungsofens angesteuert wird.

4. Einrichtung nach Anspruch 3, dadurch gekennzeichnet, daß der erste Ausgang (15) für Luft des Luft/Kohle-Separators (14) über eine als Sekundärluftzuführung dienende Rohrleitung (16) mit dem Feuerraum (5) verbunden ist.

5. Einrichtung nach Anspruch 3, dadurch gekennzeichnet, daß der Bunkerschacht (6) einem Mahl- und Trockenwerk zugeordnet ist.

6. Einrichtung nach Anspruch 3 für mehrere Verbrennungsöfen (1), dadurch gekennzeichnet, daß am Ausgang des Transportsiebes (9) eine Schleuse (12) angeordnet ist, von der aus Kanalsysteme (13A, 13B) jeweils zu einem, dem jeweiligen Verbrennungsofen zugeordneten, Luft/Kohle-Separator (14) hin verlaufen.

7. Einrichtung nach Anspruch 3. dadurch gekennzeichnet, daß die Rohrleitung (19) ins Innere des Feuerraumes (5) hineingeführt ist und in ein gebogenes und geneigtes Endteil ausläuft, dessen Biegung und Neigung einstellbar sind.

8. Einrichtung nach Anspruch 3, dadurch gekennzeichnet, daß die Rohrleitung (19) ins Innere des Feuerraumes (5) hineingeführt ist und an seinem Endteil (19A) mit einer Verteilereinrichtung versehen ist, die zur Verbesserung der Verteilung des Verbrennungszusatzes dient.

*Fig:1*

7

6

8

10

11

9  12

13B

13A

23

16  1

15

14

NH
NB

20

5

19A

17

21  18  19

22

4

3

2

*Fig:2*

1

0,75  C

0,5  A

0,25  B

S  D  L  Ma  Me  J  V  t

EP 0 213 980 B1